# EUROPÄISCHE PATENTSCHRIFT

(11) **EP 3 551 444 B1**
(45) Veröffentlichungstag und Bekanntmachung des Hinweises auf die Patenterteilung: **20.11.2024**
(21) Anmeldenummer: 17821830.1
(22) Anmeldetag: 07.12.2017
(51) Int. Cl.: B30B 11/20

(54) **VORRICHTUNG ZUM HERSTELLEN VON PELLETS**
DEVICE FOR PRODUCING PELLETS
DISPOSITIF DE FABRICATION DE PELLETS

(30) Priorität: 09.12.2016 AT 511202016
(43) Veröffentlichungstag der Anmeldung: 16.10.2019
(73) Patentinhaber: Josef Schaider Privatstiftung, 3430 Tulln-Staasdorf (AT)
(72) Erfinder: SCHAIDER, Ludwig, 3430 Staasdorf (AT); SCHAIDER, Josef, 3430 Staasdorf (AT)
(74) Vertreter: Beer & Partner Patentanwälte KG
(86) Internationale Anmeldenummer: PCT/EP2017/081837
(87) Internationale Veröffentlichungsnummer: WO 2018/104457

(56) Entgegenhaltungen:
- EP-A1- 0 594 278
- WO-A2-2016/127196
- CN-U- 204 170 700
- FR-A- 592 105
- SU-A1- 1 076 067
- SU-A1- 763 154
- SU-A1- 958 134
- US-A- 2 241 546
- US-A- 2 848 738

## Beschreibung

Die Erfindung betrifft eine Vorrichtung zum Herstellen von Pellets mit den Merkmalen des Oberbegriffs des Anspruches 1.

Eine derartige Vorrichtung ist aus der SU 763 154 A, die eine Vorrichtung nach dem Oberbegriff des Anspruchs 1 offenbart, und der SU 958 134 A bekannt. Aus der FR 592 105 A ist eine Saftpresse bekannt, die einen Maschinenrahmen, einen darin gelagerten, hohlen Außenzylinder mit einer ersten Drehachse und einen im Außenzylinder angeordneten Innenzylinder mit einer zweiten Drehachse aufweist. Zwischen einer Innenfläche des Außenzylinders und einer Außenfläche des Innenzylinders ist ein keilförmiger Spalt gebildet, und der Außenzylinder und der Innenzylinder weisen radiale Löcher zum Durchpressen von Flüssigkeit auf. Beidseitig neben dem Innenzylinder ist jeweils ein Schwenkarm angeordnet, an dem der Innenzylinder drehbar gelagert ist. Jeder Schwenkarm ist im Bereich seiner beiden Enden beweglich am Maschinenrahmen gelagert, wobei ein Lager jedes Schwenkarmes über ein Verbindungselement derart mit dem Maschinenrahmen verbunden ist, dass ein Abstand zwischen den beiden Lagern des Verbindungselementes einstellbar ist. Aus der EP 0 594 278 A1 ist eine Vorrichtung zum Herstellen von Pellets bekannt, die eine getrennte Grob- und Feineinstellung des Abstands zwischen einem Außenzylinder und darin angeordneten Innenzylindern ermöglicht. Die Innenzylinder sind über Achsen in einem Maschinenrahmen gelagert und die Grobeinstellung sowie die Feineinstellung des Abstandes zwischen den Innenzylindern und dem Außenzylinder erfolgt über eine Verdrehung der exzentrischen Achsen und darauf gelagerten exzentrischen Hohlwellen.

Das Pressen von zerkleinertem Material in Pellets-Form, das auch als Pelletieren bezeichnet wird, bietet zahlreiche Vorteile, wie beispielsweise eine erhöhte Schüttdichte, eine standardisierte Materialgröße und eine Vermeidung von Entmischung verschiedener Ausgangsmaterialien. In der Aufbereitung von Brennstoff, Futter oder Einstreu haben Pellets aus zerkleinerter Biomasse, z.B. Holzpellets, Strohpellets oder Restwertpellets, in den letzten Jahrzehnten an Bedeutung gewonnen und nehmen heutzutage einen wichtigen Platz ein.

Eine Vorrichtung zum Formen von Strängen aus einer Brenngutmischung ist aus der AT 122 169 B bekannt. Bei der darin beschriebenen Vorrichtung wird die Brenngutmischung in einen keilförmigen Spalt zwischen einem rotierenden, hohlen Außenzylinder und einem darin angeordneten, rotierenden Innenzylinder eingebracht. Der Außenzylinder wird über eine Welle in Rotation versetzt und der zwischen zwei Armen drehbar gelagerte Innenzylinder, der an den zwei Armen herab hängt, die an der Welle drehbar gelagert sind, presst die Brenngutmischung durch radiale Löcher des Außenzylinders in Strangform.

Weiters wird in der AT 346 705 B eine Vorrichtung zum Herstellen von Presslingen aus Schüttgut beschrieben. Bei dieser Vorrichtung ist zwischen einem Pressring und einer darin angeordneten, hohlen Pressrolle ein keilförmiger Spalt gebildet, in den das Schüttgut eingebracht wird. Die Pressrolle wird in Rotation versetzt, wodurch das Schüttgut durch radiale Löcher des Pressringes und der Pressrolle hindurch zu Presslingen gepresst wird.

Da das zu pressende Material, insbesondere zerkleinerte Biomasse, eine sehr unterschiedliche Beschaffenheit aufweisen kann, insbesondere was Materialeigenschaften und Größe des zerkleinerten Materials betrifft, ist es nachteilig, wenn die Vorrichtung zum Pressen von Pellets nicht an unterschiedliche Eigenschaften angepasst werden kann.

Der Erfindung liegt daher die Aufgabe zu Grunde, eine Vorrichtung der eingangs genannten Gattung zur Verfügung zu stellen, welche flexibler einsetzbar ist als die aus dem Stand der Technik bekannten Vorrichtungen.

Gelöst wird diese Aufgabe erfindungsgemäß mit einer Vorrichtung, welche die Merkmale des Anspruches 1 aufweist.

Bevorzugte und vorteilhafte Ausführungsformen der Erfindung sind Gegenstand der Unteransprüche.

Erfindungsgemäß ist vorgesehen, dass jeder Schwenkarm im Bereich seiner beiden Enden beweglich am Maschinenrahmen gelagert ist.

Dadurch kann die Lage der Drehachsen des Außen- und Innenzylinders zueinander und damit auch die Größe des keilförmigen Spaltes zwischen Außenzylinder und Innenzylinder verändert und die Vorrichtung einfach und effektiv an unterschiedlich beschaffene, zerkleinerte Materialien, insbesondere Biomasse, angepasst werden.

Bei der Erfindung ist zwischen dem ersten Ende jedes Schwenkarmes und dem Maschinenrahmen ein Verbindungselement angeordnet, das über ein erstes Lager schwenkbar mit dem ersten Ende des Schwenkarmes und über ein zweites Lager schwenkbar mit dem Maschinenrahmen verbunden ist.

Der Abstand, den die zwei Lager zueinander haben, ist manuell oder automatisch verstellbar, beispielsweise indem das Verbindungselement eine Gewindestange aufweist. Der Abstand der Drehachsen des Außen- und Innenzylinders und damit die Spaltweite kann damit verkleinert oder vergrößert werden.

Weiters ist bei der Erfindung jeder Schwenkarm an dem zweiten Ende mittels einer Exzenterwelle am Maschinenrahmen gelagert. Auch damit kann der Abstand der Drehachsen des Außen- und Innenzylinders und damit die Spaltweite verkleinert oder vergrößert werden.

In einer bevorzugten Weiterbildung dieser Ausführungsform weist die Exzenterwelle wenigstens einen ersten Abschnitt mit einer ersten Rotationsachse und wenigstens zwei weitere Abschnitte mit einer zweiten Rotationsachse auf. Die zweite Rotationsachse ist zur ersten Rotationsachse parallel, d.h. hat zu dieser einen Abstand, wodurch die weiteren Abschnitte exzentrisch zum ersten Abschnitt sind. Die Exzenterwelle ist mit dem ersten Abschnitt im Maschinenrahmen und mit den weiteren Abschnitten in jeweils einem zweiten Ende jedes Schwenkarmes drehbar gelagert. Durch Verdrehen der Exzenterwelle kann somit die Spaltweite eingestellt werden.

Bei dieser Ausführungsform kann weiters vorgesehen sein, dass die Exzenterwelle über einen Antrieb verdrehbar ist. Bevorzugt kommt hierbei ein Elektromotor, insbesondere ein Drehstrommotor, zum Einsatz, wobei zwischen Motor und Exzenterwelle bevorzugt ein Getriebe angeordnet ist. Der Antrieb kann im Rahmen der Erfindung jedoch auch manuell über einen Hebel oder eine Kurbel erfolgen.

Der keilförmige Spalt zwischen Außenzylinder und Innenzylinder weist eine Spaltweite auf, die durch ein Verändern des Abstandes der Lager des Verbindungselementes und/oder durch ein Verdrehen der Exzenterwelle veränderbar, insbesondere vergrößer- oder verkleinerbar, ist. Am Verbindungselement und/oder an der Exzenterwelle können Mittel, insbesondere Sensoren, angeordnet sein, um den Abstand zwischen den Lagern und/oder den Verdrehwinkel der Exzenterwelle erfassen und ausgeben zu können.

In einer besonders vorteilhaften Ausführungsform ist vorgesehen, dass sowohl der Außenzylinder als auch der Innenzylinder hohl ausgeführt sind und im Wesentlichen radial ausgerichtete Löcher aufweisen. Vorzugsweise wird der Innenzylinder über ein Getriebe von einem Antrieb angetrieben und das Material, insbesondere die zerkleinerte Biomasse, wird in den sich keilförmig verjüngenden Spalt eingebracht und durch die Löcher in einen Innenraum des Innenzylinders und aus dem Außenzylinder hinausgepresst. Das Material wird dadurch komprimiert und in die Form von Pellets gebracht.

Weitere Einzelheiten, Merkmale und Vorteile der Erfindung ergeben sich aus der nachstehenden Beschreibung unter Bezugnahme auf die angeschlossenen Zeichnungen, in welchen eine bevorzugte und den Schutzbereich nicht beschränkende Ausführungsform dargestellt ist. Es zeigt:
- Fig. 1: eine isometrische Ansicht einer erfindungsgemäßen Vorrichtung,
- Fig. 2: eine Vorderansicht einer erfindungsgemäßen Vorrichtung,
- Fig. 3: einen Schnitt entlang der Linie A-A in Fig. 2,
- Fig. 4: einen Schnitt entlang der Linie B-B in Fig. 2 und
- Fig. 5: einen Schnitt durch die Vorrichtung normal auf die Schnittebene von Fig. 3.

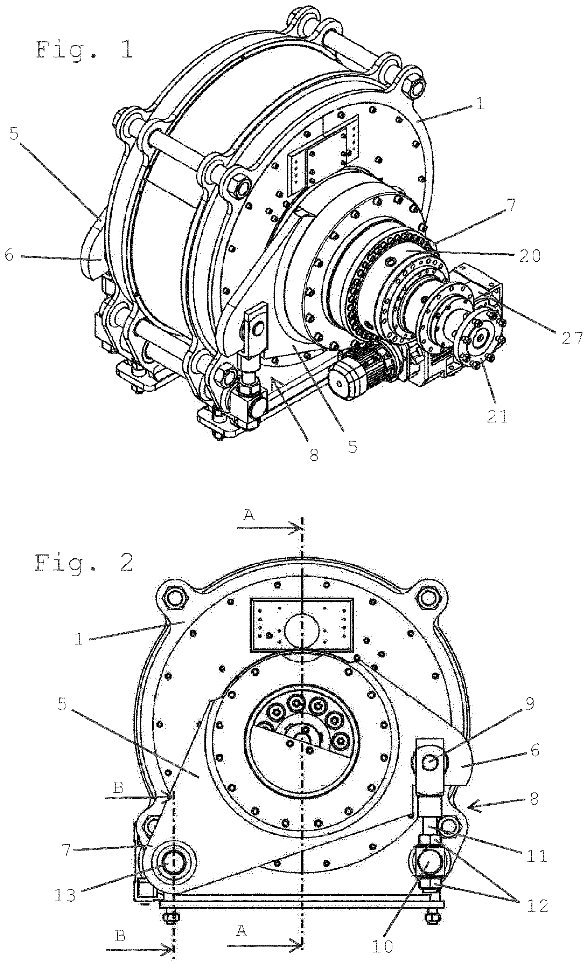

Fig. 1 zeigt eine erfindungsgemäße Vorrichtung zum Herstellen von Pellets, insbesondere aus zerkleinerter Biomasse, in einer isometrischen Ansicht.

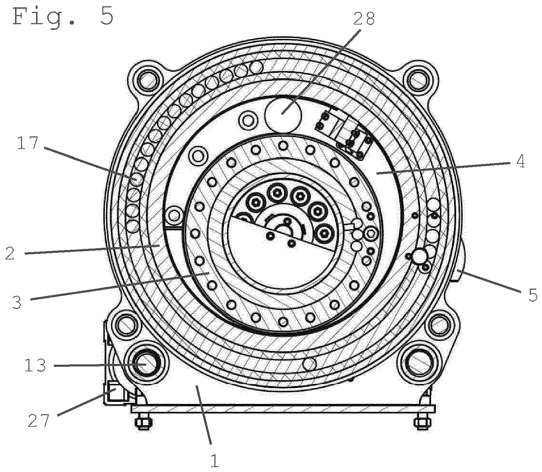

In einem Maschinenrahmen 1 ist ein hohler Außenzylinder 2 drehbar gelagert und in dem hohlen Außenzylinder 2 ist ein hohler Innenzylinder 3 angeordnet. Zwischen einer Innenfläche des Außenzylinders 2 und einer Außenfläche des Innenzylinders 3 ist ein keilförmiger Spalt 4 gebildet (Fig. 5).

Zu beiden Seiten des Innenzylinders 3 sind Schwenkarme 5 am Maschinenrahmen 1 beweglich gelagert. Der Innenzylinder 3 ist etwa im Mittelbereich der Schwenkarme 5 drehbar gelagert.

Jeder Schwenkarm 5 weist zwei Enden 6, 7 auf. Das erste Ende 6 der Schwenkarme 5 ist über ein Verbindungselement 8 beweglich mit dem Maschinenrahmen 1 verbunden. Das Verbindungselement 8 ist über ein Lager 9 schwenkbar mit dem ersten Ende 6 des Schwenkarms 5 und über ein weiteres Lager 10 schwenkbar mit dem Maschinenrahmen 1 verbunden.

Das zweite Ende 7 des Schwenkarmes 5 ist drehbar über eine Exzenterwelle 13 am Maschinenrahmen 1 gelagert.

In der dargestellten Ausführungsform weist das Verbindungselement 8 eine Gewindestange 11 mit zwei Muttern auf, zwischen denen ein Lagerbolzen des anderen Lagers 10 fixiert ist. Durch Verstellen der Muttern 12 kann der Abstand zwischen den beiden Lagern 9, 10 und damit die Größe des Spaltes 4 vergrößert oder verkleinert werden.

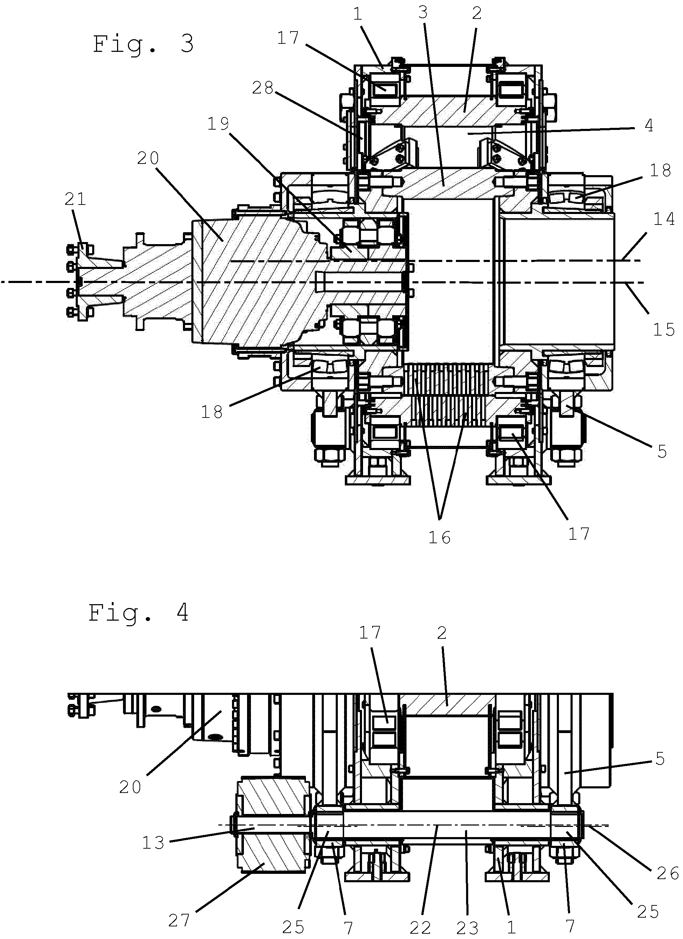

Wie in Fig. 4 dargestellt, weist die Exzenterwelle 13 einen ersten Abschnitt 23 mit einer ersten Rotationsachse 22 auf, der an zwei Stellen 24 im Maschinenrahmen 1, beispielsweise in Gleitlagerbuchsen, drehbar gelagert ist. Zwei weitere Abschnitte 25 mit einer gemeinsamen zweiten Rotationsachse 26 sind in den zweiten Enden 7 der Schwenkarme 5, beispielsweise ebenfalls in Gleitlagerbuchsen, drehbar gelagert.

Die zweite Rotationsachse 26 liegt parallel zur ersten Rotationsachse 22, wodurch die weiteren Abschnitte 25 gegenüber dem ersten Abschnitt 23 exzentrisch sind.

Durch ein Verdrehen der Exzenterwelle 13 mit Hilfe eines Antriebes 27, beispielsweise eines Drehstrommotors, werden die zweiten Enden 7 der Schwenkarme 5 angehoben oder abgesenkt und gleichzeitig seitlich verschoben. Durch die Verbindungselemente 8 und die dadurch gebildeten, jeweils zwei Freiheitsgrade aufweisenden Verbindungen zwischen Schwenkarmen 5 und Maschinenrahmen 1 sind die Schwenkarme 5 in der Lage, die mit dem Verdrehen der Exzenterwelle 13 einhergehenden, seitlichen Verschiebungen auszuführen.

Durch die Verbindungselemente 8 kann beispielsweise eine Voreinstellung bzw. eine Grobeinstellung der Spaltweite und durch die Exzenterwelle 13 eine laufende Anpassung bzw. eine Feineinstellung der Spaltweite vorgenommen werden.

Der Antrieb 27 ist über ein nicht im Detail dargestelltes Übersetzungsgetriebe, beispielsweise ein Planetengetriebe, mit der Exzenterwelle 13 verbunden und an der Exzenterwelle 13 oder im Antrieb 27 ist ein Sensor, insbesondere ein Drehgeber, angeordnet, der die Verdrehung der Exzenterwelle 13 misst, wodurch die Weite des Spaltes 4 ermittelt werden kann.

Der Außenzylinder weist eine erste Drehachse 14 auf und ist über zwei Zylinderrollenlager 17 beidseitig im Maschinenrahmen 1 gelagert.

Der Innenzylinder 3 weist eine zur ersten Drehachse 14 parallele zweite Drehachse 15 auf und ist jeweils über ein Pendelrollenlager 18 in den Schwenkarmen 5 drehbar gelagert.

Der wie vorstehend beschrieben verstellbare, keilförmige Spalt 4 weist in der Darstellung in Fig. 5 oben eine maximale und unten eine minimale Breite auf.

Eine Kupplung 19 verbindet den Innenzylinder 3 mit einem Getriebe 20, das in Fig. 3 nicht im Detail dargestellt ist und beispielsweise ein Planetengetriebe sein kann. Das Getriebe 20 ist über eine weitere Kupplung 21 mit einer nicht dargestellten Antriebswelle, z.B. einer Kardanwelle, verbunden, die von einem ebenfalls nicht dargestellten Hauptantrieb angetrieben wird, wodurch der Innenzylinder 3 in Rotation versetzt wird. Der Außenzylinder 2 rotiert aufgrund der Reibungskräfte, die zwischen den Zylindern 2, 3 und dem dazwischen zusammengepressten Material entstehen, in dieselbe Richtung wie der Innenzylinder.

In einer nicht dargestellten, alternativen Ausführungsform wird der Außenzylinder 2 angetrieben und mit einem Hauptantrieb in Rotation versetzt, wobei aufgrund der Reibkräfte zwischen den Zylindern 2, 3 und dem Material die Rotation des Innenzylinders 3 bewirkt wird. Eine weitere alternative Ausführungsform sieht vor, dass sowohl der Innenzylinder 3 als auch der Außenzylinder 2 angetrieben werden.

Das Material wird im oberen Bereich des keilförmigen Spaltes 4, durch eine Einfüllöffnung 28 zwischen die Zylinder 2, 3 eingebracht und durch die Rotation derselben zum unteren Bereich des Spaltes 4 im Bereich der minimalen Breite bewegt.

Sowohl der Außenzylinder 2 als auch der Innenzylinder 3 weisen im Wesentlichen radial ausgerichtete Löcher 16 auf, durch welche das Material, insbesondere zerkleinerte Biomasse, bei rotierendem Innenzylinder 3 und Außenzylinder 2 im Bereich der minimalen Breite des Spaltes 4 gepresst und zu Pellets geformt wird.

Die vom Außenzylinder 2 gebildeten Pellets fallen unten aus der Vorrichtung heraus, beispielsweise direkt in einen Auffangbehälter oder auf ein Fördersystem. Die vom Innenzylinder 2 gebildeten Pellets sammeln sich im Inneren des Innenzylinders 2 und können, da die Vorrichtung und der Innenzylinder 2 zu einer Seite hin offen sind, seitlich aus der Vorrichtung herausfallen bzw. entnommen werden.

## Patentansprüche

1. Vorrichtung zum Herstellen von Pellets, mit einem Maschinenrahmen (1), einem darin gelagerten, hohlen Außenzylinder (2) mit einer ersten Drehachse (14) und einem im Außenzylinder (2) angeordneten Innenzylinder (3) mit einer zweiten Drehachse (15), wobei zwischen einer Innenfläche des Außenzylinders (2) und einer Außenfläche des Innenzylinders (3) ein keilförmiger Spalt (4) gebildet ist, wobei der Außenzylinder (3) und/oder der Innenzylinder (3) radiale Löcher (16) zum Durchpressen von Material aufweist, wobei beidseitig neben dem Innenzylinder (3) jeweils ein Schwenkarm (5) angeordnet ist, an dem der Innenzylinder (3) drehbar gelagert ist, wobei jeder Schwenkarm (5) im Bereich seiner beiden Enden (6, 7) beweglich am Maschinenrahmen (1) gelagert ist, und wobei jeder Schwenkarm (5) am zweiten Ende (7) mittels einer Exzenterwelle (13) am Maschinenrahmen (1) gelagert ist, **gekennzeichnet durch** ein Verbindungselement (8), das über ein erstes Lager (9) schwenkbar mit dem ersten Ende (6) des Schwenkarmes (5) und über ein zweites Lager (10) schwenkbar mit dem Maschinenrahmen (1) verbunden ist, und dass ein Abstand zwischen den beiden Lagern (9, 10) des Verbindungselementes (8) einstellbar ist.

2. Vorrichtung nach Anspruch 1, **dadurch gekennzeichnet, dass** die Exzenterwelle (13) wenigstens einen ersten Abschnitt (23) mit einer ersten Rotationsachse (22) und wenigstens zwei weitere Abschnitte (25) mit einer zweiten Rotationsachse (26) aufweist, dass die zweite Rotationsachse (26) zur ersten Rotationsachse (22) parallel ist, und dass die Exzenterwelle (13) mit dem ersten Abschnitt (23) im Maschinenrahmen (1) und mit den weiteren Abschnitten (25) in jeweils einem zweiten Ende (7) jedes Schwenkarmes (5) drehbar gelagert ist.

3. Vorrichtung nach Anspruch 1 oder 2, **dadurch gekennzeichnet, dass** die Exzenterwelle (13) über einen Antrieb (27) verdrehbar ist.

4. Vorrichtung nach einem der Ansprüche 1 bis 3, **dadurch gekennzeichnet, dass** im Bereich der Exzenterwelle (13) ein Mittel zum Messen der Verdrehung der Exzenterwelle (13), insbesondere ein Sensor, vorzugsweise ein Drehgeber, angeordnet ist.

5. Vorrichtung nach einem der Ansprüche 1 bis 4, **dadurch gekennzeichnet, dass** der Innenzylinder (3) über Lager (18), insbesondere Wälzlager, vorzugsweise Pendelrollenlager, an den Schwenkarmen (5) gelagert ist und/oder dass der Außenzylinder (2) beidseitig über Lager (17), insbesondere Wälzlager, vorzugsweise Pendelrollenlager, am Maschinenrahmen (1) gelagert ist.

6. Vorrichtung nach einem der Ansprüche 1 bis 5, **dadurch gekennzeichnet, dass** der Innenzylinder (3) hohl ist.

7. Vorrichtung nach einem der Ansprüche 1 bis 6, **dadurch gekennzeichnet, dass** der Innenzylinder (3) an wenigstens einer Seite über ein Getriebe (20) mit einem Hauptantrieb verbunden ist.

## Claims

1. Device for producing pellets, with a machine frame (1), a hollow outer cylinder (2) mounted therein with a first axis of rotation (14), and an inner cylinder (3) arranged in the outer cylinder (2) with a second axis of rotation (15), whereby a wedge-shaped gap (4) is formed between an inner surface of the outer cylinder (2) and an outer surface of the inner cylinder (3), whereby the outer cylinder (3) and/or the inner cylinder (3) has/have radial holes (16) for pressing through material, and whereby in each case a pivot arm (5), on which the inner cylinder (3) is mounted to rotate, is arranged on both sides of the inner cylinder (3), whereby each pivot arm (5) is movably mounted on the machine frame (1) in the area of its two ends (6, 7), and whereby each pivot arm (5) on the second end (7) is mounted by means of an eccentric shaft (13) on the machine frame (1), **characterized by** a connecting element (8), which is swivel-connected to the first end (6) of the pivot arm (5) via a first bearing (9) and is swivel-connected to the machine frame (1) via a second bearing (10), and in that a distance between the two bearings (9, 10) of the connecting element (8) can be adjusted.

2. Device according to claim 1, **characterized in that** the eccentric shaft (13) has at least one first section (23) with a first axis of rotation (22) and at least two additional sections (25) with a second axis of rotation (26), **in that** the second axis of rotation (26) is parallel to the first axis of rotation (22), and **in that** the eccentric shaft (13) is mounted to rotate with the first section (23) in the machine frame (1) and with the additional sections (25) in respectively a second end (7) of each pivot arm (5).

3. Device according to claim 1 or 2, **characterized in that** the eccentric shaft (13) can be rotated via a drive (27).

4. Device according to one of claims 1 to 4, **characterized in that** a means for measuring the rotation of the eccentric shaft (13), in particular a sensor, preferably a rotary transducer, is arranged in the area of the eccentric shaft (13) .

5. Device according to one of claims 1 to 4, **characterized in that** the inner cylinder (3) is mounted on the pivot arms (5) via bearings (18), in particular roller bearings, preferably spherical roller bearings, and/or **in that** the outer cylinder (2) is mounted on the machine frame (1) on either side via bearings (17), in particular roller bearings, preferably spherical roller bearings.

6. Device according to one of claims 1 to 5, **characterized in that** the inner cylinder (3) is hollow.

7. Device according to one of claims 1 to 6, **characterized in that** the inner cylinder (3) is connected to a main drive on at least one side via a gear (20).

## Revendications

1. Dispositif pour la fabrication de pellets, avec un bâti de machine (1), un cylindre extérieur creux (2) logé dans celui-ci avec un premier axe de rotation (14) et un cylindre intérieur (3) disposé dans le cylindre extérieur (2) avec un deuxième axe de rotation (15), une fente (4) en forme de coin étant formée entre une surface intérieure du cylindre extérieur (2) et une surface extérieure du cylindre intérieur (3), le cylindre extérieur (3) et/ou le cylindre intérieur (3) présentant des trous radiaux (16) pour le pressage de matériau, un bras pivotant (5) étant respectivement disposé des deux côtés à côté du cylindre intérieur (3), sur lequel le cylindre intérieur (3) est monté à rotation, chaque bras pivotant (5) étant monté mobile sur le bâti de machine (1) dans la zone de ses deux extrémités (6, 7), et chaque bras pivotant (5) étant monté sur le bâti de machine (1) à la deuxième extrémité (7) au moyen d'un arbre excentrique (13), **caractérisé par** un élément de liaison (8) qui est relié de manière pivotante à la première extrémité (6) du bras pivotant (5) par un premier palier (9) et de manière pivotante au bâti de machine (1) par un deuxième palier (10), et en ce qu'une distance entre les deux paliers (9, 10) de l'élément de liaison (8) est réglable.

2. Dispositif selon la revendication 1, **caractérisé en ce que** l'arbre excentrique (13) présente au moins une première section (23) avec un premier axe de rotation (22) et au moins deux autres sections (25) avec un deuxième axe de rotation (26), **en ce que** le deuxième axe de rotation (26) est parallèle au premier axe de rotation (22), et **en ce que** l'arbre excentrique (13) est logé de manière rotative avec la première section (23) dans le bâti de machine (1) et avec les autres sections (25) dans respectivement une deuxième extrémité (7) de chaque bras pivotant (5).

3. Dispositif selon la revendication 1 ou 2, **caractérisé en ce que** l'arbre excentrique (13) peut être mis en rotation par un entraînement (27).

4. Dispositif selon l'une des revendications 1 à 3, **caractérisé en ce qu'**un moyen de mesure de la rotation de l'arbre excentrique (13), notamment un capteur, de préférence un capteur de rotation, est disposé dans la zone de l'arbre excentrique (13).

5. Dispositif selon l'une des revendications 1 à 4, **caractérisé en ce que** le cylindre intérieur (3) est monté sur les bras pivotants (5) par l'intermédiaire de paliers (18), notamment de roulements, de préférence de roulements à rotule sur rouleaux, et/ou **en ce que** le cylindre extérieur (2) est monté des deux côtés sur le bâti de la machine (1) par l'intermédiaire de paliers (17), notamment de roulements, de préférence de roulements à rotule sur rouleaux.

6. Dispositif selon l'une des revendications 1 à 5, **caractérisé en ce que** le cylindre intérieur (3) est creux.

7. Dispositif selon l'une des revendications 1 à 6, **caractérisé en ce que** le cylindre intérieur (3) est relié sur au moins un côté à un entraînement principal par l'intermédiaire d'un engrenage (20).
